# EUROPEAN PATENT APPLICATION

(11) **EP 1 918 758 A2**
(43) Date of publication of application: **07.05.2008**
(21) Application number: 07106952.0
(22) Date of filing: 25.04.2007
(51) Int. Cl.: G02B 26/08

(54) **Electromagnetic micro-actuator**

(30) Priority: 01.11.2006 KR 20060107487
(71) Applicant: Samsung Electro-Mechanics Co., Ltd., Suwon-si, Gyeonggi-do (KR)
(72) Inventor: Kang, Seok-jin c/o Samsung Advanced Institute of Technology, Yongin-si, Gyeonggi-do (KR); Jeong, Hyun-ku c/o Samsung Advanced Institute of Technology, Yongin-si, Gyeonggi-do (KR); Chung, Seok-whan c/o Samsung Advanced Institute of Technology, Yongin-si, Gyeonggi-do (KR)
(74) Representative: Greene, Simon Kenneth

(57) **Abstract**

Provided is an electromagnetic micro-actuator that includes a stage rotatably formed on a surface of a substrate; a pair of torsion springs connected to both sides of the stage in a rotation axis direction; a fixed frame that supports the pair of torsion springs and surrounds the stage; a driving coil wound to a predetermined depth in an upper surface of the stage; a mirror unit formed on a side of the driving coil that is in the stage; and a pair of permanent magnets formed on both sides of the fixed frame facing each other.

## Description

### BACKGROUND OF THE INVENTION

The present invention relates to an electromagnetic micro-actuator, and more particularly, to an electromagnetic micro-actuator that has a reduced moment of inertia and has a mirror unit separated from a driving coil.

Recently, research on electromagnetic micro-actuators having a microstructure manufactured by a micro-machining technique is actively being conducted for many technical fields such as displays, laser printing, precise measurement, and precise processing. For example, electromagnetic micro-actuators can be used in a display field as an optical scanner for deflecting scanning light.

A conventional electromagnetic micro-actuator includes a stage on which an optical reflective surface is formed, a driving coil wound around the optical reflective surface is formed on the stage, and a permanent magnet that forms a magnetic field in a direction crossing the driving coil. When the electromagnetic micro-actuator is operated, the stage deflects incident light on the optical reflective surface in a scanning direction of an image while the stage rotates in a direction that follows the law of Lorentz due to a mutual action between a current that flows in the driving coil and an magnetic field formed by the permanent magnet. In the above-mentioned electromagnetic micro-actuator, since the driving coil is wound around the optical reflective surface that is formed on the stage, an arm from the rotation axis to the edge of the stage is long, and thus, a moment of inertia increases. Consequently, the increase in the moment of inertia increases the driving current of the micro-actuator.

### SUMMARY OF THE INVENTION

The present invention provides an electromagnetic micro-actuator that has a reduced moment of inertia by separately locating a driving coil and a mirror unit formed in a stage in a lengthwise direction of the stage.

According to an embodiment of the present invention, there is provided an electromagnetic micro-actuator comprising: a stage rotatably formed on a surface of a substrate; a pair of torsion springs connected to both sides of the stage in a rotation axis direction; a fixed frame that supports the pair of torsion springs and surrounds the stage; a driving coil wound to a predetermined depth in an upper surface of the stage; a mirror unit formed on a side of the driving coil in the stage; and a pair of permanent magnets formed on both sides of the fixed frame facing each other.

The mirror unit may be formed in a hole in the stage to be connected to the stage by supporting beams.

The driving coil and the mirror unit may be arranged in the rotation axis direction.

The electromagnetic micro-actuator may further comprise: a pair of upper electrodes formed in portions of the fixed frame connected to the pair of torsion springs; and wires that connect both ends of the driving coil to the pair of upper electrodes.

The electromagnetic micro-actuator may further comprise: via holes formed on lower sides of the pair of upper electrodes; lower electrodes formed on a lower side of the fixed frame open to the via hole ; and conductive members that connect the pair of upper electrodes to the lower electrodes through the via holes.

According to another embodiment of the present invention, there is provided an electromagnetic micro-actuator comprising: a stage rotatably formed on a surface of a substrate; a pair of torsion springs formed in a rotation axis direction of the stage; a pair of anchors that support the pair of torsion springs and extend in a lower direction of the stage; a driving coil wound to a predetermined depth in an upper surface of the stage; a mirror unit formed on a side of the driving coil in the stage; and a pair of permanent magnets formed on both sides of the fixed frame facing each other.

According to an aspect of the present invention, the pair of anchors may be formed in a hole inside the driving coil in the stage.

According to another aspect of the present invention, one of the pair of anchors may be formed in a hole formed inside the driving coil in the stage and the other anchor of the pair of anchors is formed outside of the driving coil.

According to still another embodiment of the present invention, there is provided an electromagnetic micro-actuator comprising: a stage rotatably formed on a surface of a substrate; a mirror unit formed in the center part of the stage; a driving coil wound to a predetermined depth on both sides of the mirror unit in an upper surface of the stage; a pair of torsion springs connected to the stage in a rotation axis direction of the stage; a pair of anchors that support the torsion springs and extend in a lower direction of the stage; and a pair of permanent magnets formed on both sides of the fixed frame facing each other.

According to an aspect of the present invention, the pair of anchors are formed outside of the stage.

According to another aspect of the present invention, a pair of holes may be formed on both sides of the mirror unit in the stage, and the pair of anchors are respectively formed in the holes.

Conductive members may connect the pair of upper electrodes to the lower electrodes through the via holes.

### BRIEF DESCRIPTION OF THE DRAWINGS

The above and other features and advantages of the present invention will become more apparent by describing in detail exemplary embodiments thereof with reference to the attached drawings in which:
FIG. 1 is a plan view of an electromagnetic micro-actuator according to an embodiment of the present invention;
FIG. 2 is a cross-sectional view taken along line II-II of FIG. 1, according to an embodiment of the present invention;
FIGS. 3A through 3H are cross-sectional views illustrating a method of manufacturing an electromagnetic micro-actuator according to an embodiment of the present invention;
FIG. 4 is a plan view of an electromagnetic micro-actuator according to another embodiment of the present invention;
FIG. 5 is a cross-sectional view taken along line V-V_of FIG. 4, according to an embodiment of the present invention;
Figs. 6 and 7 are plan views of modified versions of the electromagnetic micro-actuator of FIG. 4, according to the present invention;
FIG. 8 is a plan view of an electromagnetic micro-actuator according to still another embodiment of the present invention;
FIG. 9 is a cross-sectional view taken along line IX-IX of FIG. 8, according to an embodiment of the present invention; and
FIG. 10 is a plan view of a modified version of the electromagnetic micro-actuator of FIG. 8, according the present invention.

### DETAILED DESCRIPTION OF THE INVENTION

An electromagnetic micro-actuator according to the present invention will now be described more fully with reference to the accompanying drawings in which exemplary embodiments of the invention are shown.

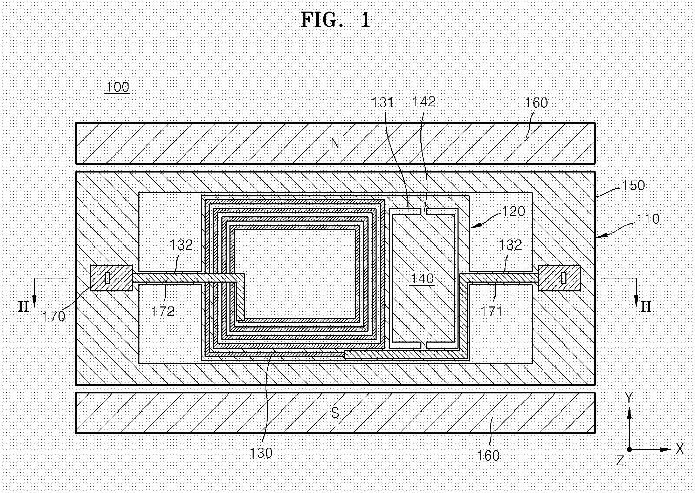

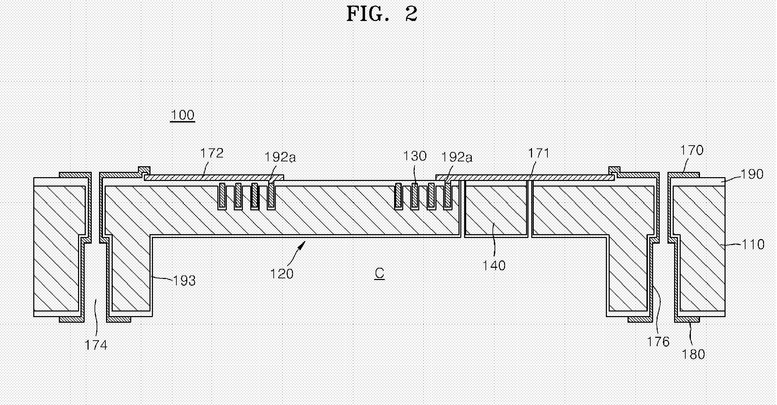

FIG. 1 is a plan view of an electromagnetic micro-actuator 100 according to an embodiment of the present invention, and FIG. 2 is a cross-sectional view taken along line II-II of FIG. 1, according to an embodiment of the present invention. In the electromagnetic micro-actuator 100 of FIG. 1, for convenience, a portion of an insulating layer is omitted.

The electromagnetic micro-actuator 100 includes a stage 120 formed on a substrate 110, a driving coil 130, a mirror unit 140, a fixed frame 150, and permanent magnets 160. The substrate 110 can be a silicon substrate 110.

The fixed frame 150 surrounds the stage 120 and has a rectangular shaped rim. The stage 120 that rotates with respect to an x direction rotation axis is formed inside the fixed frame 150. The stage 120 is supported to the fixed frame 150 by torsion springs 132 formed on the x direction rotation axis.

The stage 120 includes the driving coil 130 wound to a predetermined depth in a surface of the stage 120 and the mirror unit 140 formed separate from the driving coil 130. The mirror unit 140 is supported by a pair of supporting beams in a rectangular hole 131 that is formed in the stage 120. The driving coil 130 and the mirror unit 140 are arranged in a lengthwise direction of the fixed frame 150. A reflection film (not shown), for example, a metal thin film may be further formed on an upper surface of the mirror unit 140.

The mirror unit 140 rotates along with the rotation of the stage 120. The mirror unit 140 that is separated from the driving coil 130 indirectly receives resistance heat from the driving coil 130. The mirror unit 140 is not severely affected by the deformation of the stage 120.

A first wire 171 connects an end of the driving coil 130 and an upper electrode 170 that is formed on the fixed frame 150. The first wire 171 crosses the torsion spring 132. An insulating layer 190 is formed under the first wire 171. A second wire 172 connects the other end of the driving coil 130 and the other upper electrode 170. The second wire 172 crosses over the driving coil 130 and the other one of the torsion springs 132. The insulating layer 190 is formed under the second wire 172. The first wire 171 and the second wire 172 are formed at the same time.

Via holes 174 are formed under the upper electrodes 170, and lower electrodes 180 are formed on a lower side of the substrate 110. The upper electrodes 170 and the lower electrodes 180 are electrically connected to each other by a conductive member 176 formed in each of the via holes 174. The above-described electrode structure allows an easy connection with an external wire (not shown).

The permanent magnets 160 are formed on both sides of the driving coil 130.

The insulating layer 190 is interposed between the substrate 110 and the driving coil 130, the first wire 171, the second wire 172, the upper electrodes 170, the conductive member 176, and the lower electrodes 180.

In the electromagnetic micro-actuator 100 according to an embodiment of the present invention, the stage 120 receives force in different directions as in a y axis direction with respect to a rotation axis according to the direction of current applied to the lower electrode 180. Accordingly, the stage 120 rotates in a z axis direction. And, when the direction of the current applied to the lower electrode 180 is changed, the stage 120 rotates to an opposite direction in the z axis.

However, since the electromagnetic micro-actuator 100 according to the present embodiment does not have the mirror unit 140 within the driving coil 130, an arm from the rotation axis of the electromagnetic micro-actuator 100 to an end of the stage 120 is short, and accordingly, a moment of inertia of the electromagnetic micro-actuator 100 is reduced. The reduction of the moment of inertia of the electromagnetic micro-actuator 100 can reduce a driving current. Also, a length of the driving coil 130 in the x direction that is related to the driving force can be designed long, and thus, the driving force can be increased.

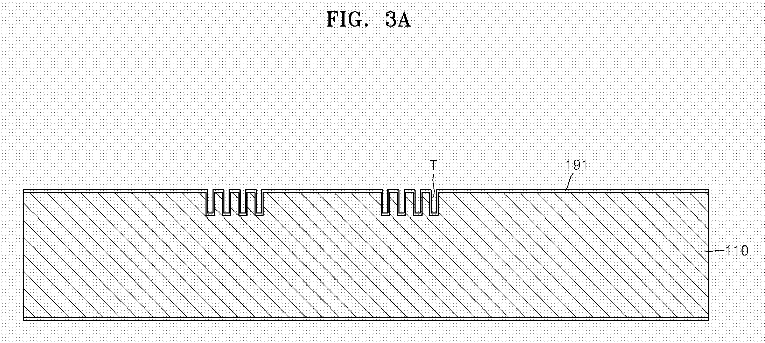

FIGS. 3A through 3H are cross-sectional views illustrating a method of manufacturing the electromagnetic micro-actuator 100, according to an embodiment of the present invention.

In FIGS. 3A through 3H, like reference numerals are used to indicate elements that are substantially identical to the elements of FIGS. 1 and 2.

Referring to FIG. 3A, trenches T having a predetermined depth are formed in regions of the substrate 110 where the driving coil 130 is formed using a mask (not shown). The trenches T can be formed using an inductively coupled plasma (ICP) reactive ion etching (RIE) method. Then, the insulating layer 191 is formed on a surface of the substrate 110. The insulating layer 191 can be a silicon oxide having a thickness of approximately 1 µm.

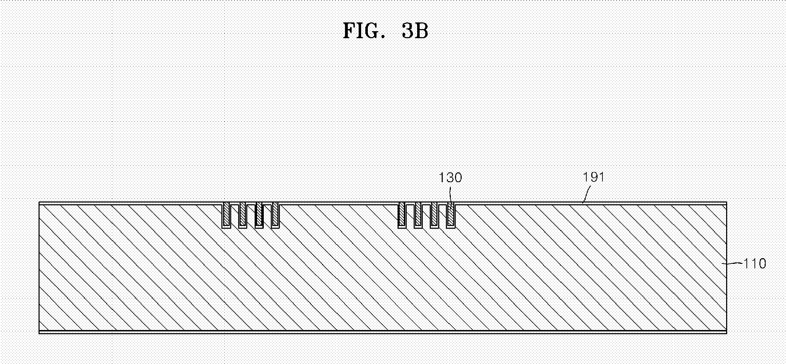

Referring to FIG. 3B, the trenches T are filled with a metal, for example, copper. In detail, after forming a Cr adhesive layer in advance under the Cu, the Cu can be filled using an electroplating method on the Cr adhesive layer. Then, the Cu on the insulating layer 191 is removed using a lapping and polishing method.

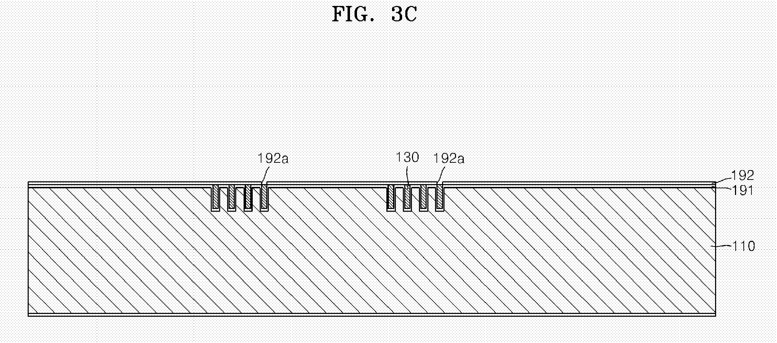

Referring to FIG. 3C, an insulating layer 192 is formed on an upper surface of the insulating layer 191, and the holes 192a that expose both ends of the driving coil 130 are formed by patterning the insulating layer 192.

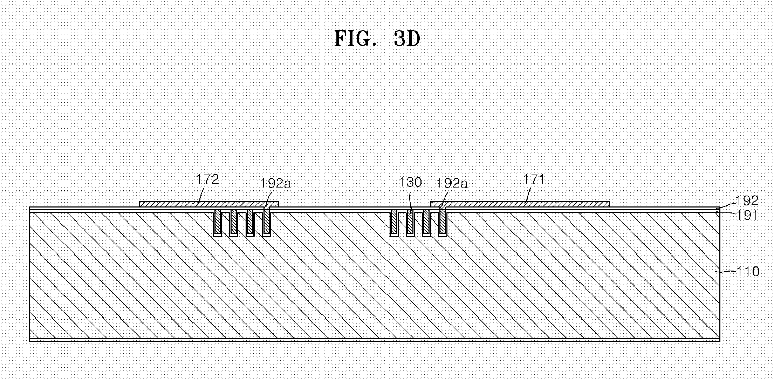

Referring to FIG. 3D, the first wire 171 and the second wire 172 for respectively connecting both ends of the driving coil 130 and the upper electrodes 170(refer to FIG. 1). The first and second wires 171 and 172 can be formed by patterning Cr/Au layer using a wet etching method after the Cr/Au layer is sputtered on the insulating layer 192.

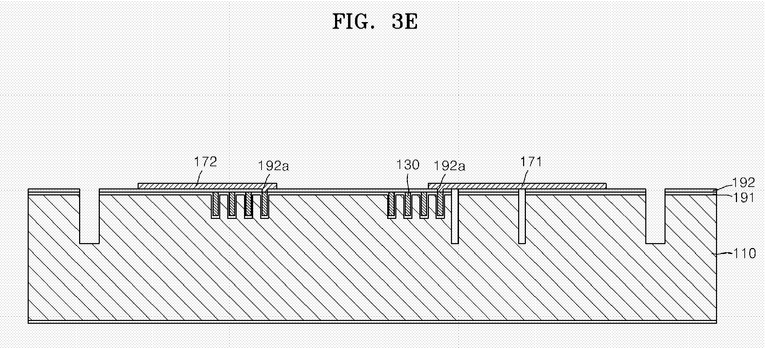

Referring to FIG. 3E, in order to form the stage 120, the mirror unit 140, and the torsion springs 132 of FIG. 1, the substrate 110 is primarily etched. To accomplish this, a mask (not shown) is formed on the substrate 110, and the substrate 110 is etched to a depth corresponding to the thickness of the stage 120 using an ICP RCE etching method.

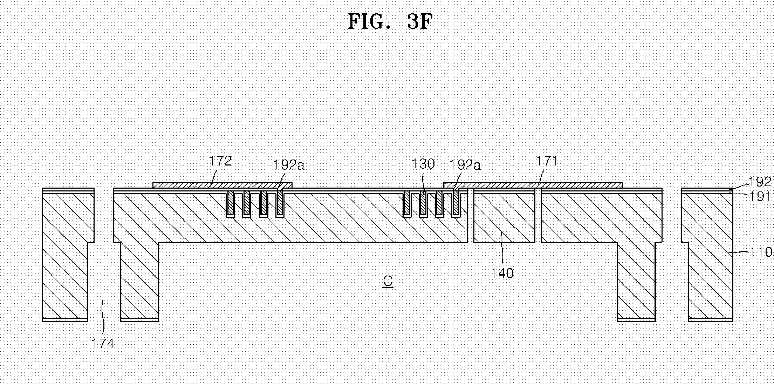

Referring to FIG. 3F, a mask (not shown) is formed on a lower side of the substrate 110. Then, cavities C for rotating the stage 120 and the via holes 174 are formed by etching regions exposed by the mask. Structures of the stage 120, the mirror unit 140, the torsion spring 132, and the fixed frame 150 are formed.

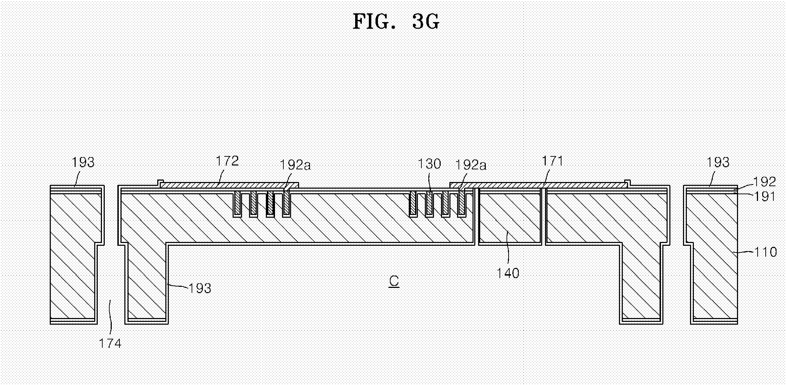

Referring to FIG. 3G, the insulating layer 193 is formed on the substrate 110. Regions for forming upper electrodes 170 are defined by patterning the insulating layer 193 formed on the substrate 110.

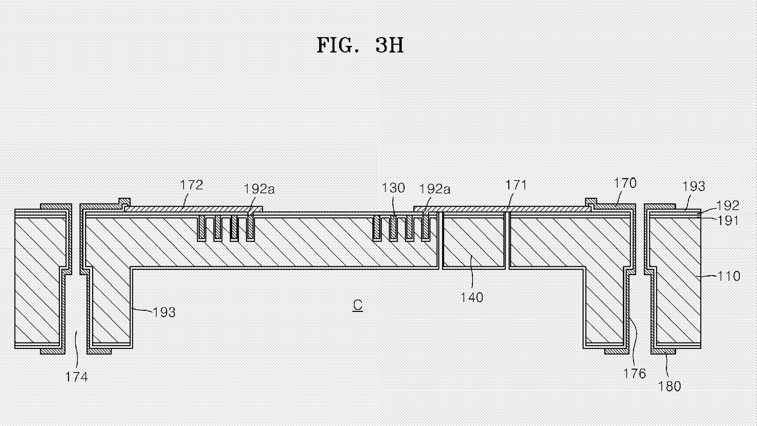

Referring to FIG. 3H, after forming masks (not shown) that define regions for forming upper and lower electrodes 170 and 180 on upper and lower surfaces of the substrate 110, the upper electrode 170 and the lower electrode 180 are respectively formed on the upper and lower surfaces of the substrate 110, and the conductive member 176 in the via holes 174 are formed using a conductive metal.

From the method described above, it can be seen that the electromagnetic micro-actuator 100 according to an embodiment of the present invention can be formed using one substrate, and the method involves a simple manufacturing process using only five masks.

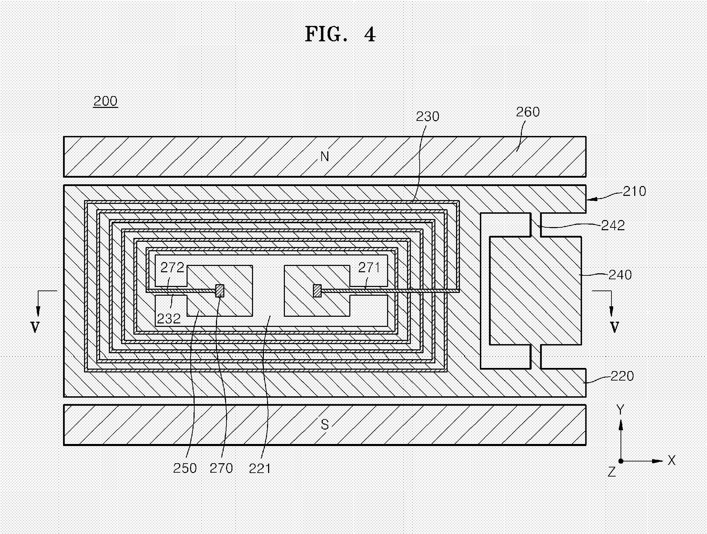

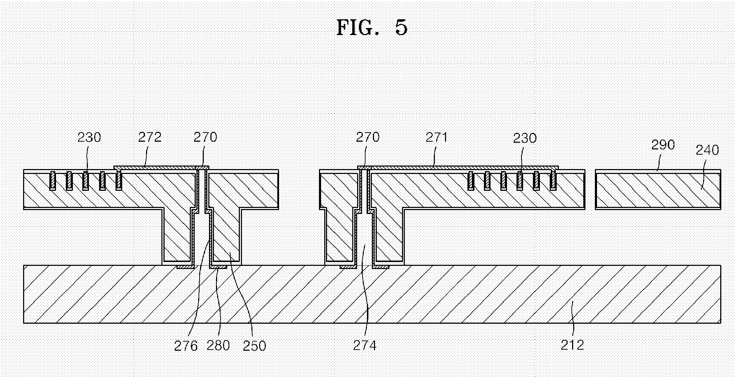

FIG. 4 is a plan view of an electromagnetic micro-actuator 200 according to another embodiment of the present invention, and FIG. 5 is a cross-sectional view taken along line V-V of FIG. 4, according to another embodiment of the present invention. In FIG. 4, a portion of an insulating layer is omitted for convenience of explanation.

Referring to FIG. 4, the electromagnetic micro-actuator 200 includes a stage 220, a driving coil 230, a mirror unit 240, a pair of anchors 250, permanent magnets 260, and a base substrate 212 that supports the substrate 210. The substrate 210 can be a silicon substrate, and the base substrate 212 can be a glass substrate or a plastic substrate.

A rectangular hole 221 is formed in an inner side of the stage 220. The pair of anchors 250 that is supported by the base substrate 212 is located in the rectangular hole 221. Upper electrodes 270 and lower electrodes 280 are respectively formed on and under each of the anchors 250. Conductive members 276 that connect the upper electrode 270 and the lower electrode 280 are formed in the pair of anchors 250.

The driving coil 230 is wound to a predetermined depth in a surface of the stage 220, and is formed to surround the pair of anchors 250. The pair of anchors 250 and the stage 220 are connected by a pair of torsion springs 232. The pair of torsion springs 232 is formed in an x axis direction and is a rotation axis of the stage 220.

In the stage 220, the mirror unit 240 is formed apart from the driving coil 230. A pair of supporting beams 242 that is connected to the stage 220 supports the mirror unit 240. The mirror unit 240 rotates along with the rotation of the stage 220. The mirror unit 240 that is separated from the driving coil 230 indirectly receives resistance heat from the driving coil 230. Thus, the mirror unit 240 is not severely affected by the deformation of the stage 220.

An end of the driving coil 230 and one of the upper electrodes 270 formed on a fixed frame 250 are connected by a first wire 271. The first wire 271 crosses over the driving coil 230 and one of the torsion springs 232. An insulating layer 290 is formed on a lower side of the first wire 271. A second wire 272 connects another end of the driving coil 230 and the other upper electrode 270. The second wire 272 crosses over the other one of the torsion springs 232. The insulating layer 290 may be formed on a lower side of the second wire 272. The first wire 271 and the second wire 272 are formed at the same time.

The permanent magnets 260 are formed on both sides of the driving coil 230.

The insulating layer 290 is formed between the substrate 210 and the driving coil 230, the first wire 271, the second wire 272, the upper electrodes 270, the conductive members 276, and the lower electrodes 280.

The electromagnetic micro-actuator 200 according to another embodiment of the present invention includes a long driving coil 230 in an x direction, and the long driving coil 230 increases a driving force of the electromagnetic micro-actuator 200.

In the present embodiment, the pair of anchors 250 are located inside the driving coil 230, but not limited thereto.

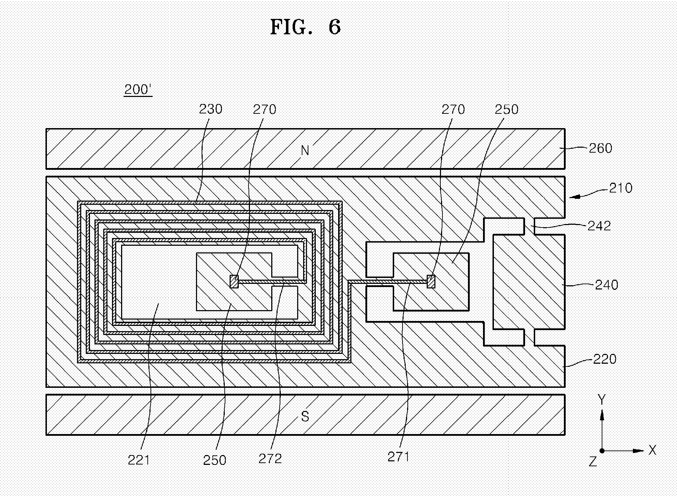

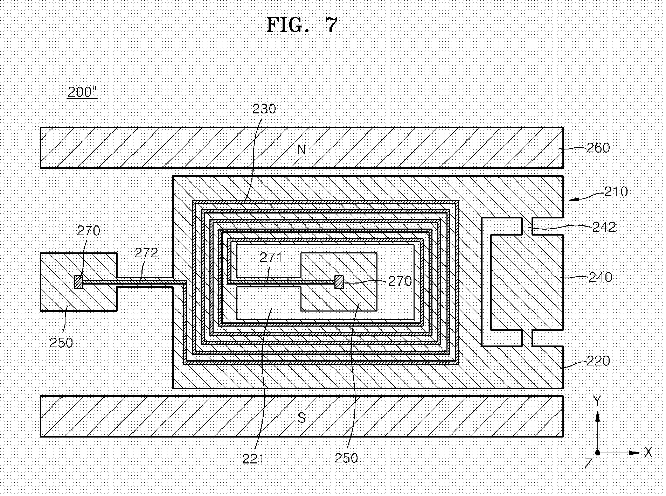

FIGS. 6 and 7 are plan views of modified versions of the electromagnetic micro-actuator 200 of FIG. 4, according to other embodiments of the present invention. Like reference numerals are used to indicate elements that are substantially identical to the elements of the electromagnetic micro-actuators 200 of FIGS. 4 and 5.

Referring to FIG. 6, in an electromagnetic micro-actuator 200', one of the pair of anchors 250 is formed in the rectangular hole 221 formed within the driving coil 230 and the other one of the pair of anchors 250 is formed between the mirror unit 240 and the driving coil 230. In the electromagnetic micro-actuator 200' of FIG. 6, wires 271 and 272 do not cross over the driving coil 230. Therefore, a short circuit between the wires 271 and 272 and the driving coil 230 does not occur.

Referring to FIG. 7, in an electromagnetic micro-actuator 200", one of the pair of anchors 250 is formed in the rectangular hole 221 formed within the driving coil 230 and the other anchor 250 is formed outside of the stage 220. In the electromagnetic micro-actuator 200", wires 271 and 272 do not cross the driving coil 230. Therefore, a short circuit between the wires 271 and 272 and the driving coil 230 does not occur.

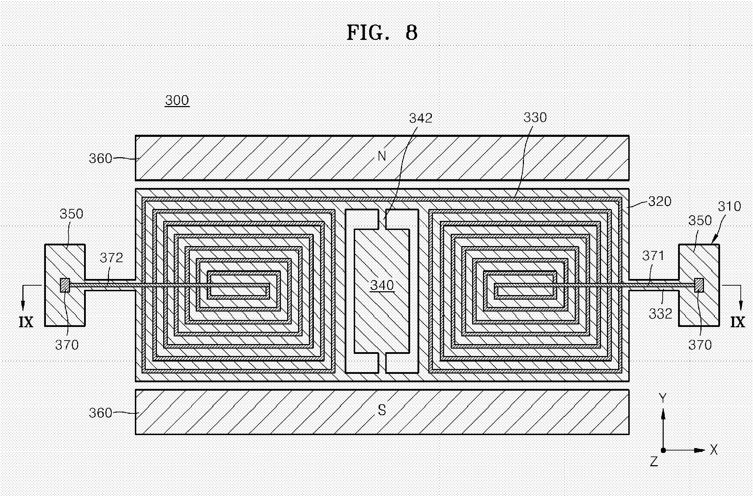

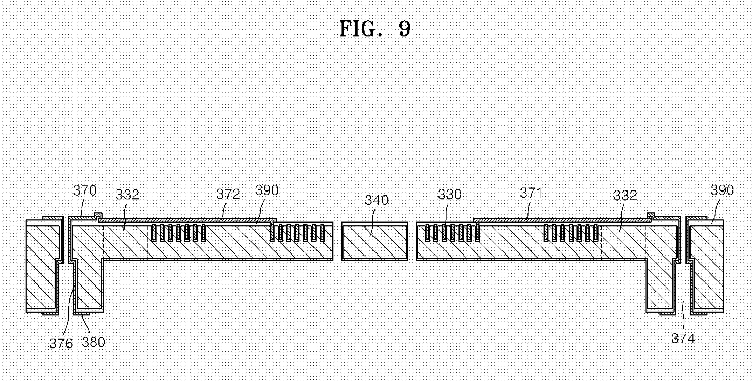

FIG. 8 is a plan view of an electromagnetic micro-actuator 300 according to another embodiment of the present invention. FIG. 9 is a cross-sectional view taken along line IX-IX of FIG. 8, according to still another embodiment of the present invention.

In FIG. 9, a portion of an insulating layer is omitted for convenience of viewing.

Referring to FIGS. 8 and 9, the electromagnetic micro-actuator 300 includes a stage 320, a driving coil 330, a mirror unit 340, anchors 350 on a substrate 310, and permanent magnets 360. The substrate 310 can be a silicon substrate.

A pair of torsion springs 332 is connected to both sides of the stage 320, and fixed by the anchors 350. The pair of torsion springs 332 acts as a rotation axis of the stage 320. The mirror unit 340 is formed in the middle part of the stage 320. The mirror unit 340 is fixed to the stage 320 by a pair of supporting beams 342 in a y direction.

The driving coil 330 is wound to a predetermined depth in a surface of the stage 320 and formed on both sides of the mirror unit 340. The driving coil 330 is formed as one unit, and both ends of the driving coil 330 are respectively connected to upper electrodes 370 that cross over the driving coil 330 and the torsion springs 332 through first and second wires 371 and 372. An insulating layer 390 is formed on lower sides of the first wire 371 and the second wire 372.

The mirror unit 340 is formed apart from the driving coil 330. The driving coil 330 and the mirror unit 340 are arranged between the anchors 350.

The mirror unit 340 rotates along with the rotation of the stage 320. The mirror unit 340 that is separated from the driving coil 330 indirectly receives resistance heat of the driving coil 330. Therefore, the mirror unit 340 is not severely affected by the deformation of the stage 320.

Via holes 374 are formed under the upper electrodes 370, and the lower electrodes 380 are formed on lower sides of the substrate 310. The upper electrodes 370 and the lower electrodes 380 are electrically connected by conductive members 376 formed in the via holes 374. The fore-mentioned electrode structure facilitates easy connection to an external wire (not shown).

Also, permanent magnets 360 are installed on both sides of the driving coil 330.

An insulating layer 390 is interposed between the substrate 310 and the driving coil 330, the first wire 371, the second wire 372, the upper electrodes 370, the conductive members 376, and the lower electrodes 380.

In an electromagnetic micro-actuator 300 in FIG. 8, since the mirror unit 340 is not formed within the driving coil 330, an arm between a rotation axis and an end of the stage 320 is short. Accordingly, a moment of inertia of the electromagnetic micro-actuator 300 is reduced, thereby reducing a driving current.

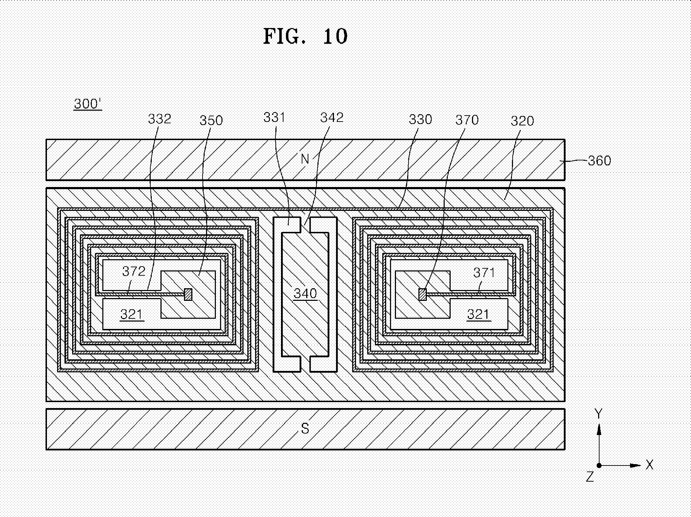

FIG. 10 is a plan view of a modified version of the electromagnetic micro-actuator 300 of FIG. 8, according to the present invention. In FIG. 10, like reference numerals are used to indicate elements that are substantially identical to the elements of FIG. 8, and thus, the detailed description thereof will not repeated.

Referring to FIG. 10, the mirror unit 340 is formed in the center part of the stage 320, and winding portions of the driving coil 330 are formed on both sides of the mirror unit 340. Rectangular holes 321 are respectively formed on both sides of the mirror unit 340, and the anchors 350 are formed in each of the rectangular holes 321. The pair of torsion springs 332 are formed between the anchors 350 and the stage 320 to support the stage 320. The pair of torsion springs 332 are formed in a rotation axis direction of the stage 320.

In the electromagnetic micro-actuator 300' of FIG. 10, since the length of the driving coil 330 int the x direction, which is related to driving force, can be formed long, an increase in the driving force can be realized.

The driving coil 330 of the electromagnetic micro-actuator 300 of FIG. 8 may be formed in two driving coils. In this case, four anchors support both ends of the two driving coils and two anchors are formed in each side of the mirror unit, but in the present invention, the anchors can be located in various ways. The locations of the anchors can be analogized from the embodiments of the present invention, and thus the detailed descriptions thereof are omitted.

In an electromagnetic micro-actuator according to the present invention, a driving coil and a mirror unit are formed together but are separated from each other. As such, the mirror unit is prevented from stage deformation caused by heat generated from the driving coil. Therefore, the performance of optical scanning of the mirror unit can be improved.

Also, the driving coil and the mirror unit are aligned in one line. Therefore, the moment of inertia of the electromagnetic micro-actuator that depends on an arm between a rotation axis of a stage and an end of the stage is reduced. As a result, an effect of reducing a driving current of the electromagnetic micro-actuator can be realized.

Also, the electromagnetic micro-actuator according to the present invention has manufacturing advantages in that the electromagnetic micro-actuator can be formed using one substrate and masking processes are minimized, thus manufacturing process is facilitated.

While the present invention has been particularly shown and described with reference to exemplary embodiments thereof, it will be understood by one of ordinary skill in the art that various changes in form and details may be made therein without departing from the scope of the present invention as defined by the following claims.

## Claims

1. An electromagnetic micro-actuator comprising:
a stage rotatably formed on a surface of a substrate;
a pair of torsion springs connected to both sides of the stage in a rotation axis direction;
a fixed frame that supports the pair of torsion springs and surrounds the stage;
a driving coil wound to a predetermined depth in an upper surface of the stage;
a mirror unit formed on a side of the driving coil in the stage; and
a pair of permanent magnets formed on both sides of the fixed frame facing each other.

2. The electromagnetic micro-actuator of claim 1, wherein the mirror unit is formed in a hole in the stage to be connected to the stage by supporting beams.

3. The electromagnetic micro-actuator of claim 1 or 2, wherein the driving coil and the mirror unit are arranged in the rotation axis direction.

4. The electromagnetic micro-actuator of any preceding claim, further comprising:
a pair of upper electrodes formed in portions of the fixed frame connected to the pair of torsion springs; and
wires that connect both ends of the driving coil to the pair of upper electrodes.

5. The electromagnetic micro-actuator of claim 4, further comprising:
via holes formed on lower sides of the pair of upper electrodes;
lower electrodes formed on a lower side of the fixed frame open to the via hole ; and
conductive members that connect the pair of upper electrodes to the lower electrodes through the via holes.

6. An electromagnetic micro-actuator comprising:
a stage rotatably formed on a surface of a substrate;
a pair of torsion springs formed in a rotation axis direction of the stage;
a pair of anchors that support the pair of torsion springs and extend in a lower direction of the stage;
a driving coil wound to a predetermined depth in an upper surface of the stage;
a mirror unit formed on a side of the driving coil in the stage; and
a pair of permanent magnets formed on both sides of the fixed frame facing each other.

7. The electromagnetic micro-actuator of claim 6, wherein the mirror unit is connected to the stage by supporting beams.

8. The electromagnetic micro-actuator of claim 6 or 7, wherein the pair of anchors is formed in a hole inside the driving coil in the stage.

9. The electromagnetic micro-actuator of claim 6 or 7, wherein one of the pair of anchors is formed in a hole formed inside the driving coil in the stage and the other anchor of the pair of anchors is formed outside of the driving coil.

10. The electromagnetic micro-actuator of any of claims 6 to 9, further comprising:
a pair of upper electrodes formed in portions of the fixed frame connected to the pair of torsion springs; and
wires that connect both ends of the driving coil to the pair of upper electrodes.

11. The electromagnetic micro-actuator of any of claims 6 to 10, further comprising:
via holes formed on lower sides of the pair of upper electrodes;
lower electrodes formed on lower sides of the_fixed frame open to the via hole; and
conductive members that connect the pair of upper electrodes to the lower electrodes through the via holes.

12. An electromagnetic micro-actuator comprising:
a stage rotatably formed on a surface of a substrate;
a mirror unit formed in the center part of the stage;
a driving coil wound to a predetermined depth on both sides of the mirror unit in an upper surface of the stage;
a pair of torsion springs connected to the stage in a rotation axis direction of the stage;
a pair of anchors that support the torsion springs and extend in a lower direction of the stage; and
a pair of permanent magnets formed on both sides of the fixed frame facing each other.

13. The electromagnetic micro-actuator of claim 12, wherein the mirror unit is connected to the stage by supporting beams in a hole that is formed in the stage.

14. The electromagnetic micro-actuator of claim 12 or 13, wherein the pair of anchors are formed outside of the stage.

15. The electromagnetic micro-actuator of claim 12, 13 or 14, wherein a pair of holes is formed on both sides of the mirror unit in the stage, and the pair of anchors are respectively formed in the holes.

16. The electromagnetic micro-actuator of any of claims 12 to 15, further comprising:
a pair of upper electrodes formed in portions of the fixed frame connected to the pair of torsion springs; and
wires that connect both ends of the driving coil to the pair of upper electrodes.

17. The electromagnetic micro-actuator of any of claims 12 to 16, further comprising:
via holes formed on lower sides of the pair of upper electrodes;
lower electrodes formed on lower sides of the_fixed frame open to the via hole; and
conductive members that connect the pair of upper electrodes to the lower electrodes through the via holes.
